# EUROPÄISCHE PATENTSCHRIFT

(11) **EP 1 169 278 B1**
(45) Veröffentlichungstag und Bekanntmachung des Hinweises auf die Patenterteilung: **25.08.2004**
(21) Anmeldenummer: 01909679.1
(22) Anmeldetag: 23.01.2001
(51) Int. Cl.: C04B 14/02

(54) **FÄRBEMITTEL ZUR SCHWARZFÄRBUNG VON ZEMENTHALTIGEN BAUSTOFFEN**
COLORANTS FOR COLORING CEMENT-CONTAINING CONSTRUCTION MATERIALS BLACK
COLORANTS POUR TEINTER EN NOIR DES MATERIAUX DE CONSTRUCTION A BASE DE CIMENT

(30) Priorität: 24.01.2000 DE 10002822
(43) Veröffentlichungstag der Anmeldung: 09.01.2002
(73) Patentinhaber: Brockhues GmbH & Co. KG, 65396 Walluf (DE)
(72) Erfinder: VOGLER, Stefan, 65396 Walluf (DE); NUNGESS, Klaus, 63263 Neu-Isenburg (DE); GUGGENBERGER, M., A., 61194 Niddatal-Assenheim (DE); VEIT, Adolf, 65187 Wiesbaden (DE)
(74) Vertreter: Maiwald Patentanwalts GmbH
(86) Internationale Anmeldenummer: PCT/EP2001/000710
(87) Internationale Veröffentlichungsnummer: WO 2001/055050

(56) Entgegenhaltungen:
- EP-A- 0 361 543
- DE-A- 19 928 043
- US-A- 4 391 329
- US-E- R E20 776
- PATENT ABSTRACTS OF JAPAN vol. 2000, no. 04, 31. August 2000 (2000-08-31) & JP 2000 026141 A (TOKAI CARBON CO LTD;TERUNAITO:KK; TOKYO ZAIRYO CO LTD; TOOTEKU KK), 25. Januar 2000 (2000-01-25)

## Beschreibung

Die vorliegende Erfindung betrifft ein Färbemittel zur Schwarzeinfärbung von zementhaltigen Gegenständen. Ferner betrifft die vorliegende Erfindung Thermalruß enthaltende wäßrige Aufschlämmungen und deren Verwendung als Färbemittel zur Herstellung gefärbter zementhaltiger Baustoffe. Ferner betrifft die vorliegende Erfindung ein Verfahren zum Einfärben von Baustoffen unter Verwendung eines Thermalruß umfassenden Färbemittels in Form einer wäßrigen Aufschlämmung.

Die Schwarzeinfärbung von zementhaltigen Baustoffen, wie zum Beispiel Betonprodukten ist ein lange bekanntes technisches Problem. Während eine Vielzahl anderer Produkte zur Einfärbung bekannt sind und problemlos angewendet werden können, lag die Schwierigkeit bei der Schwarzeinfärbung von Betonprodukten mittels Eisenoxiden immer vor allem darin, daß mit ökonomisch vertretbaren Mengen an Pigmenten keine ausreichende Farbtiefe bzw. Farbkraft erreicht werden konnte. Die im Stand der Technik verwendeten Eisenoxidschwarzpigmente (Fe₃O₄) führten meist nur zu mehr oder weniger intensiven Grautönen, jedoch nicht zu einer ausreichenden Schwarzfärbung.

Als Alternative wurden deshalb im Stand der Technik oft Pigmente auf Kohlenstoffbasis verwendet. Der Nachteil dieser Pigmentierung liegt vor allen Dingen darin, daß Kohlenstoffpigmente relativ leicht aus den Kapillaren des Baustoffs ausgewaschen werden, was letztlich in einer schlechten Bewitterungsstabilität resultiert. Auch Mischungen von Eisenoxid und Kohlenstoffpigmenten führten nicht zum gewünschten Erfolg, da hierdurch zwar die Farbkraft erhöht wurde, jedoch die Farbbeständigkeit unter üblichen Bewitterungsbedingungen nicht verbessert wurde.

Die Einbeziehung von Bindemitteln meist polymerer Art in die Färbemittelpräparationen, wie in der deutschen Patentschrift DE 30 39 527 Färbemittel für Zementbaustoffe mit diversen Pigmenten, welche als Bindemittel ein Styrol-Maleinsäureanhydrid-Copolymerisat enthalten, konnte die Farbbeständigkeit der Kohlenstoffpigmente bereits stark verbessern.

Eine andere Möglichkeit zur Erhöhung der Farbbeständigkeit von Kohlenstoffpigmenten in zementgebundenen Baustoffen ist die Verwendung von Thermalruß anstelle des sonst meist verwendeten industriellen Feinrußes. Die Verwendung von Thermalruß als Farbpigment ist in der deutschen Gebrauchsmusterschrift DE 299 10 022 beschrieben. Der besondere Vorteil von Thermalruß liegt in der Partikelgröße dieses Rußes begründet, die größer ist als die in Beton und ähnlichen Baustoffen auftretenden Porendurchmesser, so daß eine Auswaschung unter Witterungseinflüssen verhindert wird. Die DE 299 10 022 lehrt, daß eine bessere Schwarzfärbung erreicht wird, wenn das Pigment bei der Herstellung eines zementgebundenen Baustoffes als flüssige Suspension verwendet wird.

Der Nachteil derartiger dünnflüssiger Suspensionen liegt in ihrem vergleichsweise geringen Pigmentgehalt, der notwendige Voraussetzung für die niedrige Viskosität einer solchen flüssigen Suspension ist. Ferner benötigen derartige Suspensionen zur Verhinderung der Absetzung des Feststoffgehaltes neben Dispergier- und Netzmitteln in der Regel weitere Stabilisierungsmittel.

Aufgabe der vorliegenden Erfindung ist es, demgegenüber Färbemittel auf der Basis von Therrnalruß-Pigmenten für den Einsatz in zementhaltigen Gegenständen zur Verfügung zu stellen, welche über eine hohe Farbkraft bei ausreichender Farbbeständigkeit gegenüber Witterungseinflüssen aufweisen.

Eine weitere Aufgabe der vorliegenden Erfindung ist es, Färbemittel mit hohem Pigmentanteil zur Färbung zementhaltiger Gegenstände in Form wäßriger Aufschlämmungen auf der Basis von Thennalruß zur Verfügung zu stellen, welche die Einfärbung von zementhaltigen Gegenständen auf einfache Weise ermöglichen.

Eine weitere Aufgabe der vorliegenden Erfindung ist es, Färbemittel auf der Basis von Thermalruß und geeigneten Dispergier- und/oder Netzmitteln zur Verfügung zu stellen, die zum Zwecke einfacher Transportierbarkeit gleichzeitig hochdicht und lagerstabil sind, und dabei eine gleichmäßige Einfärbung von zementhaltigen Gegenständen ermöglichen.

Die oben genannten Aufgaben werden erfindungsgemäß durch die Merkmale in den unabhängigen Stoff- und Verwendungsansprüchen gelöst.

Vorteilhafte Ausgestaltungen der vorliegenden Erfindung ergeben sich durch Kombination der abhängigen Unteransprüche mit den unabhängigen Ansprüchen.

Die stoffbezogene Aufgabe wird erfindungsgemäß dadurch gelöst, daß ein Färbemittel für zementhaltige Gegenstände in Form einer wäßrigen Aufschlämmung zur Verfügung gestellt wird, das mehrs als 50 Gew.-% Thermalruß, mindestens ein Dispergier- und/oder Netzmittel sowie weitere übliche Zusätze umfaßt.

Die erfindungsgemäß verwendbaren Thermalruße, auch Spaltruße genannt, sind durch thermische Zersetzung niedriger Kohlenwasserstoffe bei hohen Temperaturen in Abwesenheit von Sauerstoff erhältlich. Als Ausgangsstoffe werden beispielsweise Erdgas, Methan, Acetylen oder auch aromatische Öle auf Basis von Kohle und Erdöl verwendet.

Zur Herstellung von Thermalruß wird das zu spaltende Gas durch ein auf etwa 1.400°C aufgeheiztes Gitterwerk aus feuerfesten Steinen geleitet, wobei es in Kohlenstoff und Wasserstoff gespalten wird. Der auf diese Weise erzeugte Ruß ist relativ hell, mit einem Kohlenstoffgehalt von ca. 98-100 %. Die Teilchengröße liegt bei ca. 200 bis 600 nm. Ein entsprechendes Thermalrußverfahren zur Herstellung dieser grobteiligen Ruße aus Erdgas ist seit etwa 1935 im Stand der Technik bekannt.

Grobteiliger Ruß kann jedoch auch durch thermisch oxidative Spaltung im sogenannten Flammenrußverfahren hergestellt werden, in dem feste oder dickflüssige aromatenreiche Materialien, Öle, Destillationsrückstände der Mineralölfabrikation etc. partiell verbrannt werden. Dieser Flammenruß kann erfindungsgemäß ebenso verwendet werden. Bevorzugt ist nach dem Thermalrußverfahren aus Erdgas hergestellter Thermalruß.

Da die durchschnittliche Porengröße in zementhaltigen Baustoffen, wie beispielsweise Beton im Bereich von etwa 0,05 bis 0,1 µm im Durchmesser liegt, müssen erfindungsgemäß verwendbare Thermalruße Partikelgrößen von mehr als 0,1 µm aufweisen. Bevorzugt ist Thermalruß mit mittleren Partikelgrößen von etwa 0,1 µm bis 0,5 µm, besonders bevorzugt von etwa 0,15 bis 0,4 µm, und insbesondere bevorzugt ist Thermalruß mit einem mittleren Teilchendurchmesser von etwa 280 nm.

Thermalruß mit diesen Partikelgrößen ist nicht porengängig, so daß die Kohlenstoff-Pigmentpartikel im ausgehärteten zementhaltigen Baustoff durch Witterungseinflüsse nicht ausgewaschen werden können. Dies führt zu sehr hoher Farbbeständigkeit der erfindungsgemäßen Baustoffe.

Auch Mischungen von Thermalruß mit anderen Pigmenten, wie zum Beispiel Eisenoxid und/oder Ruße und dergleichen, können in den Zusammensetzungen der vorliegenden Erfindung vorteilhaft eingesetzt werden.

Das erfindungsgemäße Färbemittel auf der Basis von Thennalruß wird vorzugsweise in Form einer hochviskosen pastösen wäßrigen Aufschlämmung hergestellt. Der Thermalrußgehalt erfindungsgemäßer Färbemittelzusammensetzungen liegt bei mehr als 50 Gew.-%, vorzugsweise bei 55-75 Gew.-%, und mehr bevorzugt bei 60-65 Gew.-%. Besonders bevorzugt ist ein Thermalrußgehalt von etwa 65 Gew.-%. Die Gewichtsprozentangaben beziehen sich jeweils auf die Gesamtzusammensetzung der wäßrigen Aufschlammung.

Derart hohe Feststoffgehalte müssen mit Dispergier- bzw. Netzmitteln stabilisiert werden. Eine weitere Aufgabe der Dispergier- und Netzmittel ist die gleichmäßige Verteilung der Pigmente in den Baustoffen.

Als Dispergier- und/oder Netzmittel kann gemäß der Erfindung ein Formaldehydkondensiertes, gegebenenfalls methylenverknüpftes Alkyl- und/oder Arylsulfonat und/oder ein gemischtes Alkyl/Arylsulfonat, und besonders bevorzugt ein Naphthalinsulfonsäure-Formaldehyd-Kondensat verwendet werden.

Erfindungsgemäß einsetzbare Dispergier- und/oder Netzmittel sind beispielsweise methylenverknüpfte Kondensationsprodukte von Arylsulfonsäuren, erhältlich von Bayer AG unter der Bezeichnung Tanigan®.

Ebenso erfindungsgemäß einsetzbare Dispergier- und/oder Netzmittel sind Kondensationsprodukte von Naphthalinsulfonsäure mit Formaldehyd, wie beispielsweise die unter der Bezeichnung Tamol® von BASF AG kommerziell erhältlichen Natriumsalze der Naphthalinsulfonsäure-Formaldehydkondensate.

Dispergiermittel und/oder Netzmittel werden den erfindungsgemäßen Färbemittelzusammensetzungen mit einem Gehalt von etwa 1 bis 8 Gew.-% zugesetzt, bevorzugt 2 bis 6 Gew.-% und besonders bevorzugt 3 bis 5 Gew.-%. Insbesondere bevorzugt ist die Zugabe von 3 Gew.-% Tamol®.

Als optionale weitere Komponente können erfindungsgemäße Färbemittel oberflächenaktive Polymere enthalten, die beim Aushärten des zementhaltigen Gegenstandes ihre Oberflächenaktivität irreversibel verlieren. Diese dienen der zusätzlichen Fixierung der Pigmente im eingefärbten Produkt.

Beispiele für derartige in diesem Zusammenhang verwendbare oberflächenaktive Stoffe sind Salze von Polyacrylsäuren, insbesondere Ammoniumsalze. Vorzugsweise wird als oberflächenaktiver Stoff ein wasserlösliches Salz, insbesondere das Ammoniumsalz eines niedermolekularen funktionellen Styrol-Maleinsäureanhydrid-Copolymerisats eingesetzt, welches nach dem Eintrocknen wasserunlöslich wird und somit seine Oberflächenaktivität verliert.

Die erfindungsgemäßen oberflächenaktiven Substanzen können in Mengen von 0,05 bis 150 Gew.-%, bezogen auf eingesetztes Pigment, zugesetzt werden. Die Einsatzmenge richtet sich insbesondere nach dem Pigment. Vorzugsweise werden 0,5 bis 15 Gew.-% oberflächenaktiver Substanz eingesetzt.

Besonders bevorzugt ist die Verwendung eines polyfunktionellen Styrol-Maleinsäureanhydrid-Copolymerisats, das unter der Bezeichnung SMA-Harz 1440 von der Firma Arco Chemical & Co., Philadelphia/U.S.A., vertrieben wird. Dabei handelt es sich um ein niedrigmolekulares, teilverestetes Styrol-Maleinsäureanhydrid-Copolymerisat von Zahlen mittlerem Molekulargewicht M = 2500, einem Schmelzbereich von 55-75°C und der Säurezahl 175 der Formel

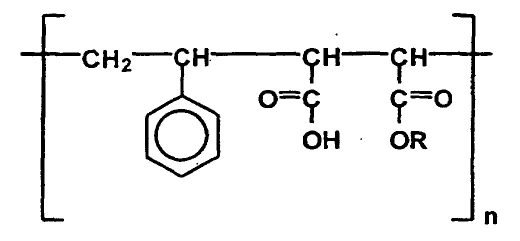

In bevorzugten Ausführungsformen des erfindungsgemäßen Färbemittels werden geringe Mengen an Konservierungsmitteln zugesetzt, die insbesondere die Lagerstabilität und Haltbarkeit der erfindungsgemäßen Färbemittel-Aufschlämmungen gewährleisten sollen. Hierzu können dem Fachmann wohlbekannte übliche Konservierungsmittel verwendet werden, bevorzugt fungizide und bakterizide Stoffe. Geeignete Konservierungsmittel sind beispielsweise Formaldehyd-abspaltende Substanzen wie z.B. Triazine (Actid GR®), Halogenwasserstoff-abspaltende Verbindungen wie etwa Mergal® KM 102, Parmetol® A 28, oder auch Isothiazoline etc.

Der Feststoffgehalt erfindungsgemäßer Färbemittel-Aufschlämmungen liegt bei mehr als 50 Gew.-%, vorzugsweise bei 55-75 Gew.-%, insbesondere bevorzugt 65-70 Gew.-%. Dadurch werden hochdichte, pastöse Aufschlämmungen erhalten, die ein ökonomisch günstiges Verhältnis von Pigmentanteil zu Gesamtgewicht des Färbemittels aufweisen.

Die erfindungsgemäße Färbemittelzusammensetzung wird in dem Fachmann bekannter Weise hergestellt. Zunächst wird Wasser, anschließend das Dispergierund/oder. Netzmittel zugesetzt, dann werden weitere Zusätze wie beispielsweise Konservierungsmittel zugegeben und schließlich wird als letzte. Komponente der Thermalruß sukzessive zugemischt.

Die Zusammensetzung wird in geeigneten Mischapparaturen gründlich vermischt und kann zur Zerschlagung von Agglomeraten der Thermalrußpartikel in Mühlen oder Knetem weiter homogenisiert werden. Dem Fachmann sind hierzu eine Vielzahl von Geräten und Möglichkeiten bekannt.

Die resultierende Partikelgröße in erfindungsgemäßen Färbemitteln liegt bei 100 nm bis zu mehr als 600 nm.

Die erfindungsgemäßen Färbemittel sind mit Pumpen förderbar, sowie leicht und sicher dosierbar.

Erfindungsgemäße Färbemittel können zur Herstellung gefärbter zementhaltiger Gegenstände verwendet werden. Je nach zugesetzter Menge des erfindungsgemäßen Färbemittels zur nicht ausgehärteten Grundmischung des zementhaltigen Gegenstandes können Farben von Grau über Dunkeigrau, Anthrazit bis hin zu vollständiger Schwarzfärbung erzielt werden.

Hierzu wird das erfindungsgemäße Färbemittel in der erforderlichen Menge der Grundmischung der herzustellenden zementhaltigen Zusammensetzung zugegeben und mit dieser ausreichend vermischt. Das nachfolgende Beispiel veranschaulicht die Zusammensetzung eines erfindungsgemäßen Färbemittels..

### Beispiel 1

Es werden 480 kg Frischwasser in einem Mischer vorgelegt und mit 46 kg Tamol NN8906 versetzt, anschließend werden 6 kg Konservierungsmittel zugesetzt. Anschließend werden unter kräftigem Mischen nach und nach 1.000 kg Thermalruß zugegeben. Die pastöse Masse wird in einer Kugelmühle gemahlen, um die Agglomerate der Thermalrußpartikel zu zerschlagen. Die gebrauchsfertige pastöse Masse weist einen Feststoffgehalt von 65,27 Gew.-% auf.

## Patentansprüche

1. Färbemittel für zementhaltige Gegenstände in Form einer wässrigen Aufschlämmung, umfassend mehr als 50 Gew.-% Thermalruß sowie mindestens ein Dispergier- und/oder Netzmittel.

2. Färbemittel nach Anspruch 1,
**dadurch gekennzeichnet, dass** die wässrige Aufschlämmung ferner ein oberflächenaktives Polymer umfasst, das beim Aushärten des zementhaltigen Gegenstandes seine Oberflächenaktivität irreversibel verliert.

3. Färbemittel nach Anspruch 2,
**dadurch gekennzeichnet, dass** das oberflächenaktive Polymer ein funktionelles Styrol-Maleinsäureanhydrid-Copolymerisat umfasst.

4. Färbemittel nach einem der Ansprüche 2 oder 3,
**dadurch gekennzeichnet, dass** oberflächenaktives Polymer in einer Menge von 0,05 bis 150 Gew.-%, bezogen auf eingesetztes Pigment, vorzugsweise 0,5 bis 15 Gew.-% enthalten ist

5. Färbemittel nach einem der vorhergehenden Ansprüche,
**dadurch gekennzeichnet, dass** als Dispergier- und/oder Netzmittel ein Formaldehydkondensiertes, (methylenverknüpftes) Alkyl- und/oder Arylsulfonat und/oder ein gemischtes Alkyl/Arylsulfonat, und besonders bevorzugt ein Naphthalinsulfonsäure-Formaldehyd-Kondensat verwendet wird.

6. Färbemittel nach einem der vorhergehenden Ansprüche,
**dadurch gekennzeichnet, dass** der Gehalt an Dispergier- und/oder Netzmittel bei etwa 1-8 Gew.-%, vorzugsweise bei 2-6 Gew.-% und besonders bevorzugt bei 3-6 Gew.-% liegt.

7. Färbemittel nach einem der vorhergehenden Ansprüche,
**dadurch gekennzeichnet, dass** das Färbemittel Tamol in einer Menge von 3 Gew.-% enthält.

8. Färbemittel nach einem der vorhergehenden Ansprüche,
**dadurch gekennzeichnet, dass** der Thermalruß mittlere Partikelgrößen von etwa 0,1 µm bis 0,5 µm, bevorzugt von etwa 0,15 bis 0,4 µm, und insbesondere bevorzugt einen mittleren Teilchendurchmesser von etwa 280 nm aufweist.

9. Färbemittel nach einem der vorhergehenden Ansprüche,
**dadurch gekennzeichnet, dass** der Thermalrußgehalt bei 55-75 Gew.-%, und mehr bevorzugt bei 60-65 Gew.-% liegt.

10. Färbemittel nach einem der vorhergehenden Ansprüche,
**dadurch gekennzeichnet, dass** der Feststoffgehalt der wässrigen Aufschlämmung bei mehr als 50 Gew.-%, vorzugsweise zwischen 55 und 75 Gew.-% und besonders bevorzugt bei 65 bis 70 Gew.-% liegt.

11. Verwendung des Färbemittels nach einem der vorhergehenden Ansprüche zur Herstellung gefärbter zementhaltiger Gegenstände.

## Claims

1. Colouring agent for cement-containing articles in the form of an aqueous slurry comprising more than 50 wt.% of thermal carbon black and at least one dispersant and/or wetting agent.

2. Colouring agent according to claim 1, **characterized in that** the aqueous slurry further comprises a surface active polymer which loses its surface activity irreversibly upon setting of the cement-containing article.

3. Colouring agent according to claim 2, **characterized in that** the surface active polymer comprises a functional styrene-maleic acid anhydride copolymerisate.

4. Colouring agent according to any one of claims 2 or 3, **characterized in that** the surface active polymer is included in an amount of 0.05 to 150 wt.%, referring to the pigment used, preferably 0.5 to 15 wt.%.

5. Colouring agent according to any one of the previous claims, **characterized in that** as the dispersant and/or wetting agent a formaldehyde condensed (methylene-linked) alkyl and/or aryl sulfonate and/or a mixed alkyl/aryl sulfonate, and particularly preferred a naphthaline sulfonic acid formaldehyde condensate is used.

6. Colouring agent according to any one of the previous claims, **characterized in that** the amount of dispersant and/or wetting agent is from about 1 to 8 wt.%, preferably from 2 to 6 wt.% and particularly preferred from 3 to 6 wt.%.

7. Colouring agent according to any one of the previous claims, **characterized in that** the colouring agent contains Tamol® in an amount of 3 wt.%.

8. Colouring agent according to any one of the previous claims, **characterized in that** the thermal carbon black has mean particle sizes of about 0.1 µm to 0.5 µm, preferably of about 0.15 to 0.4 µm, and particularly preferred a mean particle diameter of about 280 nm.

9. Colouring agent according to any of one of the previous claims, **characterized in that** the content of thermal carbon black is more than 50 wt.%, preferably from 55 to 75 wt.% and more preferable from 60 to 65 wt.%.

10. Colouring agent according to any one of the previous claims, **characterized in that** the solids content of the aqueous slurry is more than 50 wt.%, preferably from 55 to 75 wt.%, and particularly preferred from 65 to 70 wt.%.

11. The use of a colouring agent according to any one of the previous claims for the manufacture of coloured cement-containing articles.

## Revendications

1. Colorant pour produits à base de ciment sous la forme d'une suspension aqueuse comprenant plus de 50 % en poids de noir thermique ainsi qu'au moins un agent dispersant et/ou un agent mouillant.

2. Colorant selon la revendication 1, **caractérisé en ce que** la suspension aqueuse comprend en outre un polymère tensioactif qui perd de manière irréversible son activité surfacique lors de la prise du produit à base de ciment.

3. Colorant selon la revendication 2, **caractérisé en ce que** le polymère tensioactif comprend un copolymère fonctionnel d'anhydride maléique et de styrène.

4. Colorant selon la revendication 2 ou la revendication 3, **caractérisé en ce que** le polymère tensioactif est présent en une quantité comprise entre 0,05 et 150 % en poids du pigment utilisé, et de préférence entre 0,5 et 15 % en poids.

5. Colorant selon l'une des revendications précédentes, **caractérisé en ce qu'**on utilise comme agent dispersant et/ou mouillant un sulfonate d'alkyle et/ou d'aryle condensé avec du formaldéhyde (et avec liaison de méthylène) et/ou un sulfonate mixte d'alkyle et d'aryle et, de manière particulièrement préférentielle, un condensat d'acide naphtaline-sulfonique et de formaldéhyde.

6. Colorant selon l'une des revendications précédentes, **caractérisé en ce que** la teneur en agent dispersant et/ou mouillant est d'environ 1 à 8 % en poids, de préférence de 2 à 6 % en poids et, de manière particulièrement préférentielle, de 3 à 6 % en poids.

7. Colorant selon l'une des revendications précédentes, **caractérisé en ce qu'**il contient 3 % en poids de Tamol.

8. Colorant selon l'une des revendications précédentes, **caractérisé en ce que** le noir thermique présente des tailles moyennes de particules d'environ 1 µm à 0,5 µm, de préférence de 0,15 à 0,4 µm et de manière particulièrement préférentielle un diamètre moyen de particules d'environ 280 nm.

9. Colorant selon l'une des revendications précédentes, **caractérisé en ce que** la teneur en noir thermique est comprise entre 55 et 75 % en poids et préférentiellement entre 60 et 65 % en poids.

10. Colorant selon l'une des revendications précédentes, **caractérisé en ce que** la teneur en solides de la suspension aqueuse est supérieure à 50 % en poids et est comprise de préférence entre 55 et 75 % en poids et, de manière particulièrement préférentielle, entre 65 et 70 % en poids.

11. Utilisation du colorant selon l'une des revendications précédentes pour obtenir des produits à base de ciment teintés.
